# EUROPÄISCHE PATENTSCHRIFT

(11) **EP 3 426 535 B1**
(45) Veröffentlichungstag und Bekanntmachung des Hinweises auf die Patenterteilung: **15.12.2021**
(21) Anmeldenummer: 17707554.6
(22) Anmeldetag: 27.02.2017
(51) Int. Cl.: B60W 30/18, B60W 50/14

(54) **VERFAHREN ZUM BETREIBEN DES FAHRERASSISTENZSYSTEMS UND FAHRERASSISTENZSYSTEM**
METHOD FOR OPERATING A DRIVER ASSISTANCE SYSTEM, AND DRIVER ASSISTANCE SYSTEM
PROCÉDÉ POUR FAIRE FONCTIONNER UN SYSTÈME D'AIDE À LA CONDUITE ET SYSTÈME D'AIDE À LA CONDUITE

(30) Priorität: 11.03.2016 DE 102016204096
(43) Veröffentlichungstag der Anmeldung: 16.01.2019
(73) Patentinhaber: Volkswagen AG, 38436 Wolfsburg (DE)
(72) Erfinder: NEUNER, Dr. Helge, 38300 Wolfenbüttel (DE); THOMSCHKE, Sebastian, 38104 Braunschweig (DE); KRAHNSTÖVER, Anna Zoe, 85049 Ingolstadt (DE)
(86) Internationale Anmeldenummer: PCT/EP2017/054515
(87) Internationale Veröffentlichungsnummer: WO 2017/153197

(56) Entgegenhaltungen:
- EP-A2- 2 944 532
- DE-A1-102011 112 577
- DE-A1-102012 108 563
- DE-A1-102012 222 053
- US-A1- 2013 010 484

## Beschreibung

Die vorliegende Erfindung betrifft ein Verfahren zum Betreiben eines Fahrerassistenzsystems für ein erstes Fahrzeug, das sich auf einer ersten Fahrspur einer Fahrbahn befindet, welche ferner zumindest eine zweite Fahrspur umfasst, die benachbart zur ersten Fahrspur liegt. Bei dem Verfahren werden Betriebsdaten und Umgebungsdaten des ersten Fahrzeugs erfasst und es wird eine Spurwechselintention für das erste Fahrzeug bestimmt. In Abhängigkeit von den erfassten Betriebsdaten und Umgebungsdaten des ersten Fahrzeugs wird ein Fahranweisungssignal für die Durchführung eines Spurwechsels des ersten Fahrzeugs von der ersten auf die zweite Fahrspur bestimmt. Ferner wird von dem ersten Fahrzeug in Abhängigkeit von dem Fahranweisungssignal ein Steuersignal für eine Lichtverteilung mit zumindest einem Lichtsymbol erzeugt, durch die einem Fahrer des ersten Fahrzeugs signalisiert wird, dass der Spurwechsel sicher erfolgen kann. Dabei wird anhand des Steuersignals die Lichtverteilung für den Fahrer des ersten Fahrzeugs auf der Fahrbahn dargestellt.

Die Erfindung betrifft ferner ein Fahrerassistenzsystem für ein erstes Fahrzeug, das sich auf einer ersten Fahrspur einer Fahrbahn befindet, welche ferner zumindest eine zweite Fahrspur umfasst, die benachbart zur ersten Fahrspur liegt. Das Fahrerassistenzsystem umfasst eine Erfassungseinheit, durch die Betriebsdaten und Umgebungsdaten des ersten Fahrzeugs erfassbar sind. Es umfasst ferner eine Recheneinheit, durch die eine Spurwechselintention für das erste Fahrzeug bestimmbar ist und durch die in Abhängigkeit von den erfassten Betriebsdaten und Umgebungsdaten des ersten Fahrzeugs ein Fahranweisungssignal für die Durchführung eines Spurwechsels des ersten Fahrzeugs von der ersten auf die zweite Fahrspur bestimmbar ist. Es umfasst zudem eine Steuereinheit, durch die in Abhängigkeit von dem Fahranweisungssignal ein Steuersignal für eine Lichtverteilung mit zumindest einem Lichtsymbol erzeugbar ist, durch die dem Fahrer des ersten Fahrzeugs signalisiert wird, dass der Spurwechsel sicher erfolgen kann, und eine Ausgabeeinheit, durch die anhand des Steuersignals die Lichtverteilung für den Fahrer des ersten Fahrzeugs auf der Fahrbahn darstellbar sind.

Es ist bekannt, Fahrzeuge mit verschiedenen Fahrerassistenzsystemen auszustatten, welche den Fahrer beim Fahren des Fahrzeugs unterstützen. Solche Fahrerassistenzsysteme sollen insbesondere das Umfeld des Fahrzeugs erfassen und interpretieren, um gefährliche Situationen, insbesondere solche, die mit einer Kollisionsgefahr verbunden sind, frühzeitig zu erkennen und den Fahrer bei seinen Fahrmanövern zu unterstützen. Durch Fahrerassistenzsysteme soll der Fahrer dabei unterstützt werden, Kollisionen nach Möglichkeit ganz zu vermeiden oder zumindest die Folgen einer Kollision so gering wie möglich zu halten. Dabei besteht bei Spurwechselmanövern eine besonders hohe Gefahr, mit einem gerade überholenden Fahrzeug zu kollidieren.

Es sind beispielsweise Kollisionswarnsysteme bekannt, die Objekte im Umfeld des Fahrzeugs detektieren und den Fahrer auf solche Objekte hinweisen, die eine Kollisionsgefahr darstellen. Derartige Systeme können insbesondere den Fahrer bei Nachtfahrten unterstützen, da in diesem Fall die Ausleuchtung der Umgebung des Fahrzeugs durch das Fahrzeugscheinwerfersystem geringer ist als bei Tagfahrten. Beispielsweise ist ein Spurwechselassistent bekannt, bei dem der Fahrer durch eine Warnleuchte am Außenspiegel des Fahrzeugs auf von hinten herannahende Fahrzeuge hingewiesen wird, die sich in einem schlecht einsehbaren Bereich befinden und bei einem Spurwechsel zu beachten sind.

Die DE 10 2010 034 853 A1 beschreibt ein Kraftfahrzeug mit Digitalprojektoren zum Projizieren eine graphischen oder schriftbildlichen Information. Dabei kann beispielsweise eine Geschwindigkeitsbegrenzung oder eine Richtungsinformation dargestellt werden, etwa in Form des Bildes eines Verkehrszeichens.

Bei dem in der DE 10 2005 022 663 A1 beschriebenen Verfahren zur Fahrerunterstützung wird, beispielsweise am Ende eines Beschleunigungsstreifens, eine Einfädelsituation erkannt und es wird ein Signal ausgegeben, das den Fahrer auf das Vorliegen dieser Situation hinweist. Ferner kann dem Fahrer eine Geschwindigkeitsänderung empfohlen werden, um den Spurwechsel sicher durchführen zu können.

Die DE 10 2012 222 053 A1 beschreibt ein Verfahren, bei dem mittels einer Head-Up-Anzeige Fahranweisungen ausgegeben werden. Dabei kann eine Darstellung des Fahrzeugs an einer Zielposition angezeigt werden oder es können Pfeile ausgegeben werden, um auf einen vorzunehmenden Spurwechsel hinzuweisen.

Die US 2013/0010484 A1 beschreibt eine Fahrzeugblinkleuchte und ein Verfahren zum Steuern derselben, die es anderen Fahrern oder Fußgängern ermöglicht, eine Änderung der Fahrtrichtung eines Fahrzeugs an einer Kreuzung leicht zu erkennen, selbst wenn es schwierig ist, die Blinkleuchte zu sehen. Mittels der Fahrzeugblinkleuchte kann ein Lichtmuster auf die Fahrbahn projiziert werden, welche die Fahrtrichtung anzeigt.

Der vorliegenden Erfindung liegt die Aufgabe zugrunde, ein Fahrerassistenzsystem und ein Verfahren zum Betreiben des Fahrerassistenzsystems bereitzustellen, durch die der Fahrer eines Fahrzeugs beim Durchführen eines Spurwechsels auf leicht und schnell erfassbare Weise unterstützt wird.

Erfindungsgemäß wird diese Aufgabe durch ein Verfahren mit den Merkmalen des Anspruchs 1 sowie ein Fahrerassistenzsystem mit den Merkmalen des Anspruchs 9 gelöst. Vorteilhafte Ausgestaltungen und Weiterbildungen ergeben sich aus den abhängigen Ansprüchen.

Bei dem erfindungsgemäßen Verfahren wird die Lichtverteilung in zwei Bereichen dargestellt, wobei sich ein erster Bereich auf der ersten Fahrspur und ein zweiter Bereich auf der zweiten Fahrspur befindet.

Der Fahrer kann dadurch vorteilhafterweise leicht und schnell erfassen, ob ein Spurwechsel sicher durchgeführt werden kann. Damit kann ferner ein weiterer Schritt zur Unterstützung des Fahrers bei einem Spurwechsel unternommen werden, wobei der Fokus der Erfindung nicht auf der Warnung vor Gefahren liegt, sondern auf einer Anzeige für den Fahrer, wann das Manöver sicher ausgeführt werden kann, oder einer Aufforderung zum Durchführen des Manövers, etwa um damit gefährliche Situationen zu vermeiden.

Die erfassten Betriebsdaten des ersten Fahrzeugs können verschiedene Informationen über den Zustand des Fahrzeugs umfassen, während die Umgebungsdaten des ersten Fahrzeugs Daten die Umgebung des ersten Fahrzeugs umfassen. Dabei kann der als "Umgebung" bezeichnete Raum nicht nur statisch definiert sein, beispielsweise durch einen Radius um das erste Fahrzeug, sondern er kann verschiedene Bereiche betreffen und insbesondere auch in Abhängigkeit von den Betriebsdaten des ersten Fahrzeugs bestimmt werden.

Zur Bestimmung der Spurwechselintention können verschiedene Daten verwendet werden, insbesondere die Betriebsdaten und/oder die Umgebungsdaten des ersten Fahrzeugs. Beispielsweise kann in der Umgebung des Fahrzeugs ein Fahrspurverlauf oder ein Ende einer Fahrspur erfasst werden, beispielsweise bei einem Beschleunigungsstreifen oder eine Fahrbahnverengung. Ferner kann anhand von Daten über ein mit relativ zu dem ersten Fahrzeug langsamer Geschwindigkeit vorausfahrendes Fahrzeug auf eine Spurwechselintention für das erste Fahrzeug geschlossen werden, insbesondere wenn sich der Abstand des ersten Fahrzeugs zu dem vorausfahrenden schnell verringert und der Fahrer vermutlich zum Überholen ansetzen will. Ferner kann eine Eingabe eines Nutzers erfasst werden, mit der dieser seine Spurwechselintention ausdrückt. Insbesondere kann dies an eine Bedienung einer Einrichtung, etwa eines Blinkers des ersten Fahrzeugs, geknüpft sein.

Die Erfassung der Umgebungsdaten erfolgt auf an sich bekannte Weise, etwa mittels Sensoren des ersten Fahrzeugs oder anderen, datentechnisch mit dem ersten Fahrzeug verbundenen Einrichtungen. Ferner können Daten von einer Verkehrsüberwachungseinrichtung erfasst werden oder es kann mittels eines Positionsbestimmungssystems des ersten Fahrzeugs ein Abgleich mit Daten einer Datenbank erfolgen, etwa mit geographischen Daten, die Informationen über die Fahrbahn und insbesondere die erste und zweite Fahrspur umfassen.

Das erzeugte Fahranweisungssignal umfasst Informationen darüber, wie die Fahrt des ersten Fahrzeugs fortgesetzt werden soll, um eine sichere Fahrt zu gewährleisten, wobei insbesondere Kollisionen vermieden werden. Dabei können insbesondere an sich bekannte Verfahren verwendet werden, etwa mithilfe eines Spurwechselassistenten, der vor Gefahren beim Spurwechsel warnt. Es kann etwa ein Wert für die Sicherheit eines Spurwechsels zu einem Zeitpunkt bestimmt und mit einem festen Schwellenwert verglichen werden. Übersteigt die Sicherheit den Schwellenwert, so wird davon ausgegangen, dass ein Spurwechsel sicher möglich ist. Umgekehrt kann bestimmt werden, dass der Spurwechsel nicht sicher durchgeführt werden kann. Ferner können Voraussetzungen für einen künftigen sicheren Spurwechsel bestimmt werden, beispielsweise kann ein Spurwechsel nach einer Beschleunigung oder einem Abbremsen des ersten Fahrzeugs sicher sein. Das Fahranweisungssignal kann also etwa die Information umfassen, dass ein Spurwechsel aktuell sicher oder unsicher ist beziehungsweise dass er nach einer bestimmten Geschwindigkeitsveränderung sicher sein wird.

Zur Ausgabe von Informationen des Fahranweisungssignals an den Fahrer wird eine Lichtverteilung mit zumindest einem Lichtsymbol erzeugt. Insbesondere wird dem Fahrer damit anzeigt, welche Maßnahmen er ergreifen soll, um ein sicheres Durchführen des Spurwechsels zu gewährleisten. Insbesondere wird als Lichtsymbol eine optisch oder visuell erfassbare Markierung bezeichnet. Diese kann beispielsweise mithilfe eines im ersten Fahrzeug angeordneten Scheinwerfersystems auf der Fahrbahn erzeugt werden oder mittels einer Sichtfeldanzeige in das Sichtfeld des Fahrers projiziert werden.

Insbesondere kann die Lichtverteilung eine Vielzahl von einzelnen Lichtsymbolen umfassen. Dadurch kann vorteilhafterweise eine größere Zahl von Darstellungsmöglichkeiten ausgegeben werden. Die Lichtverteilung umfasst in diesem Fall zumindest zwei voneinander getrennte Elemente, das heißt einzelne Lichtsymbole, die als einzelne Zeichen erfassbar sind. Dabei können die einzelnen Lichtsymbole aneinander angrenzen und ineinander übergehen.

Insbesondere umfasst die Lichtverteilung zumindest vier einzelne Lichtsymbole. Die Anzahl der einzelnen Lichtsymbole kann insbesondere in Abhängigkeit von dem Fahranweisungssignal oder während der zeitlich veränderlichen Darstellung variieren. Es hat sich jedoch gezeigt, dass eine Anzahl von vier Lichtsymbolen, insbesondere 4 grätenförmigen Markierungen, als besonders vorteilhaft empfunden werden. Ferner kann die Lichtverteilung zwischen zwei und sechs, vorteilhafterweise zwischen drei und fünf einzelne Lichtsymbole umfassen.

Beispielsweise kann die Lichtverteilung einen oder mehrere Pfeile, Pfeilköpfe und/oder grätenförmige Markierungen umfassen. Die Lichtsymbole können dabei einzeln oder in Verbindung miteinander Bedeutungsträger sein und etwa eine Richtung im Raum auszeichnen oder eine Aufforderung an den Fahrer symbolisieren, zum Beispiel eine Aufforderung zu erhöhter Aufmerksamkeit. Insbesondere können alternativ oder zusätzlich Zahlen oder Schriftzeichen dargestellt werden.

Die Darstellung der einzelnen Lichtverteilung kann etwa statisch erfolgen, wobei eine als zeitlich unveränderlich wahrgenommene Lichtverteilung erfolgt. Insbesondere kann die Lichtverteilung mit dem zumindest einen Lichtsymbol an einer festen Position relativ zu dem ersten Fahrzeug dargestellt werden. Dies kann vorteilhafterweise dem Fahrer den Inhalt des Fahranweisungssignals noch deutlicher vermitteln.

Bei einer Ausgestaltung des erfindungsgemäßen Verfahrens wird die Lichtverteilung zeitlich veränderlich dargestellt, wobei durch die zeitliche veränderte Darstellung eine Bewegung in Richtung von der ersten Fahrspur zur zweiten Fahrspur dargestellt wird. Insbesondere können dabei die einzelnen Lichtsymbole zeitlich veränderlich, also dynamisch, dargestellt werden. Es wird anhand der zeitlichen Veränderung eine Bewegung in einer Richtung von der ersten zur zweiten Fahrspur dargestellt. Insbesondere verläuft diese Richtung senkrecht zur Längserstreckungsrichtung der Fahrspuren oder der Fahrbahn. Beispielsweise kann ein Lauflicht angezeigt werden, bei dem einzelne in einer räumlichen Folge angeordnete Lichtsymbole synchronisiert und periodisch regelmäßig angezeigt und ausgeblendet werden, wobei sich der optische Eindruck eines sich in eine Richtung bewegenden Impulses ergibt.

Zudem kann ein einzelnes Lichtsymbol dynamisch angezeigt werden, etwa indem sich die Helligkeit der Lichtverteilung zeitlich verändert und sich beispielsweise ein Lichtimpuls im Bereich des Lichtsymbols bewegt. Ferner können Lichtsymbole relativ zum Fahrzeug und/oder relativ zur Fahrbahn in eine bestimmte Richtung bewegt dargestellt werden. Des Weiteren können die einzelnen Lichtsymbole nacheinander erscheinen und/oder ausgeblendet werden, wobei insbesondere die Abfolge dieser Anzeige periodisch wiederholt werden kann. Insbesondere zeigt die dargestellte Bewegung an, dass eine Beschleunigung des Fahrzeugs in eine Richtung beziehungsweise eine Verzögerung durchgeführt werden soll.

Die Lichtverteilung wird fahrspurübergreifend dargestellt, das heißt, sie erstreckt sich auf die erste und die zweite, benachbarte Fahrspur. Insbesondere kann die Lichtverteilung eine mehrere einzelne Lichtsymbole umfassen, von denen eines oder mehrere auf der ersten beziehungsweise zweiten Fahrspur dargestellt werden. Insbesondere wird eine Bewegung von der ersten hin zur zweiten Fahrspur auch dadurch dargestellt, dass die zeitlich veränderliche Darstellung einen sich in eine Richtung fortpflanzenden Impuls umfasst, der sich von dem Bereich auf der ersten Fahrspur hin zu dem Bereich auf der zweiten Fahrspur bewegt. Insbesondere können der erste und zweite Bereich zusammenhängen, wobei der von ihnen gebildete zusammenhängende Bereich die einzelnen Lichtsymbole umfasst, die so dargestellt werden, dass ein Bedeutungszusammenhang deutlich wird, etwa durch die zeitlich veränderliche Darstellung.

Insbesondere kann die Darstellung der Lichtverteilung in dem Moment erfolgen, in dem das Einscheren sicher ist und unmittelbar durchgeführt werden soll. Ferner kann bei der Bestimmung des Zeitpunkts für die Darstellung der Lichtverteilung die Reaktionszeit eines menschlichen Fahrers berücksichtigt werden, insbesondere indem die Aufforderung zum Durchführen des Spurwechsels angezeigt wird, wenn nach dem Verstreichen der Reaktionszeit ein sicherer Spurwechsel möglich sein wird.

Ferner können in Abhängigkeit von dem Fahranweisungssignal auch Lichtsignale erzeugt und dargestellt werden, die dem Fahrer signalisieren, dass das Durchführen eines Spurwechsels aktuell unsicher wäre. Insbesondere kann diese Darstellung eine zeitlich veränderliche Darstellung von Lichtsymbolen umfassen, bei der eine Bewegung in Richtung von der zweiten zur ersten Fahrspur oder eine andere Bewegungsrichtung dargestellt wird.

Die Darstellung der Lichtverteilung erfolgt so, dass sie für den Fahrer auf der Fahrbahn erscheint. Dies kann so erfolgen, dass ein tatsächliches Bild der Lichtverteilung auf der Fahrbahn erzeugt wird, die Darstellung kann jedoch auch so erzeugt werden, dass die Lichtverteilung das von dem Fahrer wahrgenommene Bild der Fahrbahn überlagert. Insbesondere kann die Lichtverteilung mittels einer Projektion auf die Fahrbahn projiziert und/oder mittels einer Sichtfeldanzeige dargestellt werden. Damit werden vorteilhafterweise an sich bekannte Verfahren zur Darstellung der Lichtverteilung verwendet.

Eine Projektion der Lichtverteilung auf die Fahrbahn kann auch für andere Verkehrsteilnehmer sichtbar sein. Beispielsweise können andere Verkehrsteilnehmer darauf hingewiesen werden, dass ein Einscheren des ersten Fahrzeugs auf die zweite Fahrbahn bevorsteht.

Diese Möglichkeit zur Darstellung der Lichtverteilung ist insbesondere bei Dunkelheit möglich, wenn auf die Fahrbahn projizierte Lichtsymbole besonders gut sichtbar sind.

Mittels einer Sichtfeldanzeige, etwa eines *Head-up-Displays* (HUD), wird die Lichtverteilung durch eine Projektion in das Sichtfeld des Fahrers dargestellt und überlagert daher in seiner Wahrnehmung das Bild der Umgebung, insbesondere der Fahrbahn. Die Lichtverteilung kann dabei auch bei Tageslicht gut erfassbar dargestellt werden. Ferner kann die Darstellung mit Mitteln für die sogenannte erweiterte Realität (*"augmented reality"*) erfolgen, etwa mittels einer Datenbrille, durch die Bilder direkt ins Sichtfeld oder ins Auge eines Nutzers projiziert werden. In diesen Bilder kann insbesondere die Wahrnehmung der realen Umgebung durch virtuelle Objekte überlagert werden.

Auch die beiden Bereiche auf der ersten und zweiten Fahrspur können dadurch gebildet werden, dass die Lichtverteilung die Fahrbahn überlagernd dargestellt wird. In diesem Fall sind die Bereiche auf der Fahrbahn definiert und die Lichtverteilung wird bei der überlagernden Darstellung so erzeugt, dass sie diese Bereiche überlagernd dargestellt wird. Erfolgt eine Projektion der Lichtverteilung auf die Fahrbahn, so wird die Lichtverteilung mit dem zumindest einen Lichtsymbol direkt auf die Bereiche auf der ersten und zweiten Fahrbahn projiziert.

Bei einer Ausbildung der Erfindung umfassen die erfassten Betriebsdaten des ersten Fahrzeugs eine Geschwindigkeit, einen Lenkeinschlag und/oder den Aktivierungszustand eines Blinkers des ersten Fahrzeugs. Ferner können Beschleunigung, Fahrtrichtung und/oder die Aktivität anderer Einrichtungen des Fahrzeugs erfasst werden. Dadurch werden vorteilhafterweise Informationen über den Zustand des ersten Fahrzeugs erfasst und das Fahranweisungssignal kann besser erzeugt werden. Insbesondere kann anhand des Aktivierungszustands des Blinkers leichter erkannt werden, ob eine Spurwechselintention des Fahrers vorliegt. Ferner sind die Daten über die Bewegung des Fahrzeugs von großer Bedeutung für die Frage, ob ein Spurwechsel sicher durchführbar ist oder ob gegebenenfalls zunächst weitere Maßnahmen, etwa eine Änderung der Geschwindigkeit, vorgenommen werden müssen.

Bei einer weiteren Ausbildung umfassen die erfassten Umgebungsdaten des ersten Fahrzeugs Informationen über ein Ende der ersten Fahrspur und/oder über zumindest ein weiteres Fahrzeug in der Umgebung des ersten Fahrzeugs. Dadurch kann vorteilhafterweise das Fahranweisungssignal besonders gut an die Umgebung des ersten Fahrzeugs angepasst werden.

Insbesondere kann anhand des Endes der ersten Fahrspur bestimmt werden, dass der Fahrer mit hoher Wahrscheinlichkeit einen Spurwechsel vornehmen will. Beispielsweise kann dies am Ende eines Beschleunigungsstreifens oder bei einer Fahrbahnverengung, etwa bei einer Baustelle, vorliegen.

Ferner können Daten über ein weiteres Fahrzeug zur Bestimmung der Spurwechselintention und zur Bewertung der Sicherheit eines Spurwechsels verwendet werden, etwa die Position, der Abstand oder die Geschwindigkeit des weiteren Fahrzeugs relativ zum ersten Fahrzeug. Das weitere Fahrzeug befindet sich dabei insbesondere auf der ersten Fahrspur vor oder hinter dem ersten Fahrzeug oder auf der zweiten Fahrspur in einem für das erste Fahrzeug relevanten Bereich. Die Daten über das weitere Fahrzeug können dessen Geschwindigkeit, insbesondere relativ zum ersten Fahrzeug, ihren Abstand zum ersten Fahrzeug, ihre Fahrtrichtung und/oder von diesem erzeugte Signale, etwa eines Blinkers, umfassen.

Ferner können Daten über weitere Fahrspuren erfasst werden. Die Umgebungsdaten können ferner Daten über Infrastruktureinrichtungen, Verkehrsregeln wie Geschwindigkeitsbeschränkungen und Überholverbote, einen Zustand oder Verlauf der Fahrspuren oder weitere Daten umfassen.

Bei einer Weiterbildung des erfindungsgemäßen Verfahrens wird die Spurwechselintention automatisch erzeugt oder durch eine Nutzereingabe erfasst. Dadurch wird vorteilhafterweise eine besonders sichere Erkennung der Spurwechselintention gewährleistet.

Die Spurwechselintention wird insbesondere als ein quantitativer Wert bestimmt, der die Wahrscheinlichkeit angibt, dass der Fahrer des ersten Fahrzeugs zu einem bestimmten Zeitpunkt einen Spurwechsel von der ersten auf die zweite Fahrspur vornehmen will. Es kann ein Schwellenwert definiert sein und eine Spurwechselintention kann als gegeben angenommen werden, wenn der bestimmte Wert den Schwellenwert übersteigt. Die Bestimmung des Wertes kann anhand aller verfügbaren Daten erfolgen, insbesondere können die Betriebsdaten und/oder Umgebungsdaten verwendet werden. In einer Ausgestaltung kann ein Lernverfahren angewandt werden, um die Bestimmung der Spurwechselintention an das gewöhnliche Verhalten des Fahrers des ersten Fahrzeugs anzupassen.

Bei einer automatischen Bestimmung wird der Wert durch eine Einrichtung des Fahrzeugs automatisch erzeugt, etwa durch eine Recheneinheit oder ein Navigationsgerät. Zum Erfassen einer Nutzereingabe kann etwa ein Bedienelement vorgesehen sein, welches eine Spurwechselintention signalisiert und das Fahrerassistenzsystem aktiviert. Ferner kann die Bedienung anderer Einrichtungen des Fahrzeugs als Nutzereingabe erfasst werden, etwa das Aktivieren eines Blinkers, das gewöhnlich einem Spurwechsel unmittelbar vorausgeht.

Erfindungsgemäß umfasst das Fahranweisungssignal eine vorbereitende Lichtverteilung als Hinweis auf eine empfohlene Geschwindigkeitsänderung des ersten Fahrzeugs. Diese vorbereitende Lichtverteilung wird auf der ersten Fahrspur dargestellt. Dabei wird die Lichtverteilung für den Spurwechsel anschließend an die Darstellung der vorbereitenden Lichtverteilung dargestellt, wobei eine Übergangsdarstellung erzeugt wird, die nach der vorbereitenden Lichtverteilung und vor der Lichtverteilung für den Spurwechsel dargestellt wird.

Dadurch kann vorteilhafterweise eine besonders klare Anweisung an den Fahrer ausgegeben werden, die es ihm ermöglicht, einen sicheren Spurwechsel durchzuführen. Insbesondere umfasst das Verfahren in diesem Fall drei Schritte: Zunächst wird die vorbereitende Lichtverteilung dargestellt und es wird dem Fahrer signalisiert, dass er die Geschwindigkeit des ersten Fahrzeugs anpassen muss, um zu einem späteren Zeitpunkt einen sicheren Spurwechsel durchführen zu können. Dann erfolgt eine Übergangsdarstellung, die schließlich in eine Darstellung der oben beschriebenen Lichtverteilung für den Spurwechsel übergeht.

Die vorbereitende Lichtverteilung kann dabei ähnlich wie die Lichtverteilung für den Spurwechsel erzeugt und dargestellt werden, insbesondere kann eine zeitlich veränderliche Darstellung erfolgen und es kann eine Richtung dargestellt werden, wobei diese Richtung insbesondere in Fahrtrichtung oder gegen die Fahrtrichtung des ersten Fahrzeugs weist. Die vorbereitende Lichtverteilung kann Markierungen ähnlicher Art umfassen, beispielsweise Pfeile, Pfeilköpfe oder grätenförmige Markierungen. Alternativ oder zusätzlich kann die Darstellung der vorbereitenden Lichtverteilung so erfolgen, dass dabei andere Fahranweisungen ausgegeben werden, beispielsweise zu einer Richtungsänderung.

Die Übergangsdarstellung verbindet die vorbereitende Lichtverteilung mit der Darstellung der Lichtverteilung für den Spurwechsel. Beispielsweise kann hier eine zeitliche Veränderung dargestellt werden, etwa ein Umklappen von einzelnen oder einer Gesamtheit von Lichtsymbolen, das dem Fahrer des ersten Fahrzeugs signalisiert, dass nach einem Beschleunigen oder Verzögern nun der Spurwechsel sicher erfolgen kann.

Bei einer Weiterbildung wird die Lichtverteilung in relativ zu dem ersten Fahrzeug konstantem Abstand, bei einer relativ zur Fahrbahn konstanten Position oder bei einer relativ zu einer potentiellen Einscherposition konstanten Position auf der Fahrbahn dargestellt.

Dies erlaubt vorteilhafterweise die Ausführung verschiedener Darstellungsformen der Lichtverteilung, insbesondere bezüglich ihrer Darstellung relativ zum ersten Fahrzeug. Bei einem konstanten Abstand zum Fahrzeug kann die Darstellung etwa zwischen 10 und 30 Meter, vorteilhafterweise zwischen 10 und 20 Meter vom Fahrzeug entfernt angezeigt werden. Ferner kann die Lichtverteilung so dargestellt werden, dass sie eine bestimmte Position auf der Fahrbahn oder relativ zum Verkehr auf der zweiten Fahrspur markieren. Beispielsweise kann die Darstellung relativ zur Fahrbahn fest sein und eine Position zum sicheren Spurwechsel markieren. Ferner kann die Position der Darstellung synchron zu einer Lücke im Verkehr auf der zweiten Fahrspur bewegt werden, insbesondere kann eine relativ zur Fahrbahn feste Darstellung zu einer anderen Position springen, wenn etwa das sichere Durchführen eines Spurwechsels an der zunächst angezeigten Position nicht mehr möglich ist.

Bei einer weiteren Ausbildung umfasst das Fahranweisungssignal einen Dringlichkeitswert und die Lichtverteilung wird so erzeugt, dass dem Fahrer die Dringlichkeit in Abhängigkeit von dem Dringlichkeitswert signalisiert wird. Dadurch kann das Fahranweisungssignal vorteilhafterweise noch differenzierter ausgegeben werden.

Beispielsweise kann bestimmt werden, dass ein Spurwechsel innerhalb einer bestimmten Zeit durchgeführt werden muss, um eine sichere Weiterfahrt zu gewährleisten. In diesem Fall kann der Fahrer durch die Darstellung der Lichtverteilung auf eine besondere Dringlichkeit des Spurwechsels hingewiesen werden, beispielsweise durch eine bestimmte farbliche Gestaltung, eine zeitliche Veränderung wie etwa Blinken und/oder durch eine Veränderung der Form der Lichtverteilung oder der einzelnen Lichtsymbole.

Bei dem erfindungsgemäßen Fahrerassistenzsystem wird die Lichtverteilung in zwei Bereichen dargestellt, wobei sich ein erster Bereich auf der ersten Fahrspur und ein zweiter Bereich auf der zweiten Fahrspur befindet. Es ist dadurch gekennzeichnet, dass das Fahranweisungssignal eine vorbereitende Lichtverteilung als Hinweis auf eine empfohlene Geschwindigkeitsänderung des ersten Fahrzeugs umfasst, die auf der ersten Fahrspur darstellbar ist, wobei die Lichtverteilung für den Spurwechsel anschließend an die Darstellung der vorbereitenden Lichtverteilung darstellbar ist, wobei eine Übergangsdarstellung erzeugt wird, die nach der vorbereitenden Lichtverteilung und vor der Lichtverteilung für den Spurwechsel darstellbar ist.

Das erfindungsgemäße Fahrerassistenzsystem ist insbesondere ausgebildet, das vorstehend beschriebene erfindungsgemäße Verfahren zu implementieren.

Das erfindungsgemäße Fahrerassistenzsystem weist somit dieselben Vorteile auf wie das erfindungsgemäße Verfahren.

Bei einer Ausgestaltung umfasst die Lichtverteilung eine Vielzahl von einzelnen Lichtsymbolen. Die Lichtverteilung kann dadurch vorteilhafterweise so gestaltet werden, dass das Fahranweisungssignal besonders deutlich und für den Fahrer verständlich ausgegeben wird.

Bei einer Ausbildung ist die Lichtverteilung zeitlich veränderlich darstellbar und durch die zeitliche veränderte Darstellung ist eine Bewegung in Richtung von der ersten Fahrspur zur zweiten Fahrspur darstellbar. Auf diese Weise erfolgt die Ausgabe des Fahranweisungssignals vorteilhafterweise besonders deutlich und leicht erfassbar.

Bei einer Weiterbildung des erfindungsgemäßen Fahrerassistenzsystems umfasst die Ausgabeeinheit eine Projektionseinheit und/oder eine Sichtfeldanzeige. Dadurch kann die Lichtverteilung vorteilhafterweise gut sichtbar für den Fahrer des ersten Fahrzeugs dargestellt werden, wobei ihre Darstellung zumindest die Ansicht der Fahrbahn aus Sicht des Fahrers überlagert.

Die Erfindung wird nun anhand von Ausführungsbeispielen mit Bezug zu den Zeichnungen erläutert.
Figur 1A zeigt schematisch den Aufbau eines Ausführungsbeispiels des erfindungsgemäßen Fahrerassistenzsystems,
Figur 1B zeigt ein Ausführungsbeispiel für eine nicht erfindungsgemäße Lichtverteilung,
Figur 2 zeigt ein Ausführungsbeispiel für eine nicht erfindungsgemäße Lichtverteilung,
Figuren 3A und 3B zeigen ein Ausführungsbeispiel für Lichtverteilungen für eine Aufforderung zum Beschleunigen des Fahrzeugs und zum Durchführen eines Spurwechsels,
Figuren 4A und 4B zeigen ein Ausführungsbeispiel für Lichtverteilungen für eine Aufforderung zum Verzögern des Fahrzeugs und zum Durchführen eines Spurwechsels und
Figuren 5A und 5B zeigen ein Ausführungsbeispiel für eine nicht erfindungsgemäße ortsfest dargestellte Lichtverteilung.

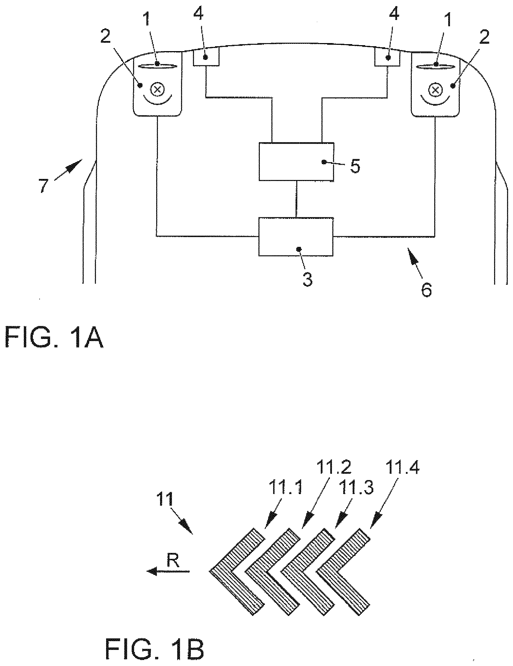

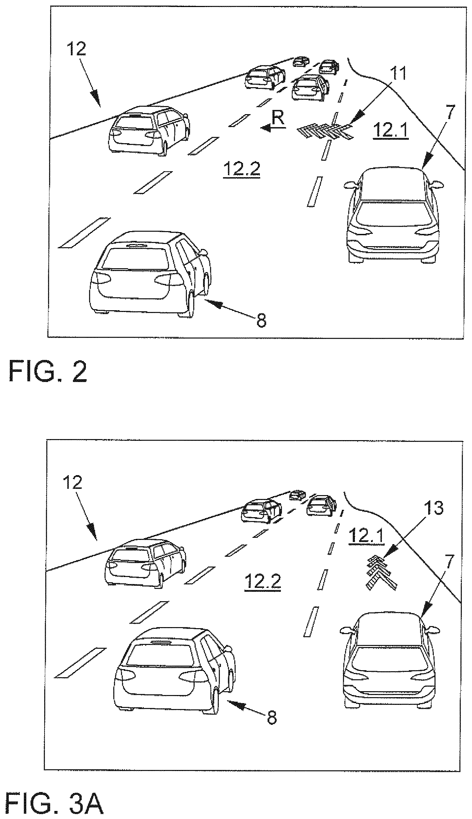

Mit Bezug zu den Figuren 1A, 1B und 2 werden Ausführungsbeispiele des erfindungsgemäßen Fahrerassistenzsystems und des erfindungsgemäßen Verfahrens erläutert.

Ein erstes Fahrzeug 7 umfasst ein erfindungsgemäßes Fahrerassistenzsystem 6 und weist ein Scheinwerfersystem 2 auf. Das Scheinwerfersystem 2 wird von einer Steuervorrichtung 3 angesteuert. Mit dem Scheinwerfersystem 2 lassen sich vielfältige Abstrahlcharakteristiken erzeugen. Zum einen sind die bekannten Lichtfunktionen zum Beleuchten des Umfelds vor dem Fahrzeug 7 verfügbar, wie beispielsweise eine Abblendlichtfunktion und eine maskierte Dauerfernlichtfunktion, wobei eine Ausgangslichtverteilung auf einer Fahrbahn 12 erzeugt wird. Zum anderen ist das Scheinwerfersystem 2 so ausgebildet, dass eine Lichtverteilung 11 mit einer Vielzahl von einzelnen Lichtsymbolen 11.1 bis 11.4 auf der Fahrbahn vor dem Fahrzeug 7 erzeugt werden kann, durch die dem Fahrer des Fahrzeugs 7 eine Fahranweisung signalisiert werden kann, die vom Fahrerassistenzsystem 6 erzeugt wird, wie weiter unten genauer ausgeführt wird.

In einem weiteren Ausführungsbeispiel umfasst die Lichtverteilung lediglich ein Lichtsymbol 11.1 bis 11.4.

Die einzelnen Lichtsymbole 11.1 bis 11.4 können derart erzeugt werden, dass lediglich die Fahranweisung ausgegeben wird, ohne dass dabei ferner die Ausgangslichtverteilung des Fahrzeugs 7 besteht, oder die Fahranweisung kann innerhalb einer bestehenden Ausgangslichtverteilung als zusätzliche Lichtemission erzeugt werden. Mit dem Scheinwerfersystem 2 ist es dabei möglich, die Fahranweisung dadurch auszugeben, dass anhand von Steuersignalen der Steuereinheit 3 die Lichtsymbole 11.1 bis 11.4 dargestellt werden.

In dem Ausführungsbeispiel wird die Lichtverteilung 11 mit den einzelnen Lichtsymbolen 11.1 bis 11.4 von einer Projektionseinheit 1 erzeugt. Dabei werden Lichtstrahlen gebündelt auf die Fahrbahn projiziert. Dadurch kommt es zu einer erhöhten Lichtreflexion an der Stelle der Fahrbahn 12, an welcher die gebündelten Lichtstrahlen auf die Fahrbahn treffen. Es werden dann die Lichtemission, die von den gebündelten Lichtstrahlen erzeugt wird, und gegebenenfalls eine Ausgangslichtverteilung des Scheinwerfersystems 2 überlagert, sodass in der Lichtverteilung vor dem Fahrzeug 7 die Lichtsymbole 11.1 bis 11.4 angezeigt werden.

Alternativ kann das Scheinwerfersystem 2 auch eine Laserprojektionseinheit oder vollständig als Laserscheinwerfer ausgestaltete Scheinwerfer umfassen, bei denen alle erzeugbaren Lichtfunktionen des Scheinwerfersystems 2 von Laserstrahlen erzeugt werden.

Dies hat den Vorteil, dass keine Lichtemissionen überlagert werden müssen, beispielsweise eine Abblendlichtfunktion und eine Lichtverteilung 11. Die einzelnen Lichtsymbole 11.1 bis 11.4 können dann direkt von einem einzigen Lichtmodul erzeugt werden. Die Lichtemission des Scheinwerfersystems 2 kann dadurch voll variabel angesteuert werden und es können beliebige Muster in der Lichtverteilung 11 erzeugt werden.

Weiterhin kann das Scheinwerfersystem 2 auch eine Vielzahl von lichtemittierenden Dioden (LEDs) umfassen, die in einer oder in mehreren Matrizen angeordnet sind. Dabei ist es insbesondere möglich, die Lichtintensität jeder einzelnen lichtemittierenden Diode über die Steuervorrichtung 3 anzusteuern. Auch hierdurch lassen sich einzelne Lichtsymbole 11.1 bis 11.4 einer Lichtverteilung 11 erzeugen.

In einem weiteren Ausführungsbeispiel umfasst das Fahrzeug 7 alternativ oder zusätzlich ein *Head-Up-Display*, durch welches die Lichtverteilung 11 direkt in das Sichtfeld des Fahrers projiziert wird. Die Darstellung der Lichtverteilung 11 mit den Lichtsymbolen 11.1 bis 11.4 durch das *Head-Up-Display* erfolgt dabei so, dass die Lichtverteilung 11 und insbesondere die Lichtsymbole 11.1 bis 11.4 auf der Fahrbahn 12 dargestellt werden beziehungsweise diese überlagernd vom Fahrer wahrgenommen werden. In ähnlicher Weise sind andere Ausgabeeinheiten 1 zur Darstellung der Lichtverteilung 11 denkbar, insbesondere Mittel für die Erzeugung einer erweiterten Realität (*augmented reality*), etwa eine Datenbrille. In jedem Fall erfolgt die Darstellung der Lichtverteilung 11 so, dass sie für den Fahrer des Fahrzeugs 7 auf der Fahrbahn erscheint.

Des Weiteren weist das Fahrerassistenzsystem 6 eine Erfassungseinheit 4 auf, durch die Betriebsdaten des ersten Fahrzeugs 7, insbesondere seine Geschwindigkeit, sowie Daten über die Umgebung des Fahrzeugs 7 erfassbar sind. Zu den erfassten Daten über die Umgebung des Fahrzeugs 7 gehören insbesondere die Geschwindigkeit und die Position eines zweiten Fahrzeugs 8. Insbesondere wird die Geschwindigkeit des zweiten Fahrzeugs 8 relativ zur Geschwindigkeit des ersten Fahrzeugs 7 erfasst sowie der Abstand des zweiten Fahrzeugs 8 zum ersten Fahrzeug 7. Ferner werden von einem Navigationssystem des Fahrzeugs 7 bereitgestellte Daten über den Streckenverlauf der Fahrbahn 12 bzw. ihrer Fahrspuren 12.1, 12.2 erfasst, insbesondere die Position von Kurven auf der befahrenen Strecke.

Die Erfassungseinheit 4 kann insbesondere Umfeldsensoren umfassen, wie zum Beispiel Radarsensoren, LIDAR-Sensoren, Laserscanner, eine Mono- oder Stereokamera, Ultraschallsensoren und/oder PMD 2D- oder 3D-Sensoren (Fotomischdetektoren), deren Ausgangssignale an eine Recheneinheit 5 übertragen werden. Die Erfassungseinheit 4 kann dabei insbesondere auch für andere Fahrzeugsfunktionen, beispielsweise das maskierte Dauerfernlicht, verwendet werden. Es müssen dann keine separaten Umfeldsensoren im Fahrzeug 7 verbaut werden.

Ferner wird ein Aktivieren eines Blinkers durch den Fahrer des Fahrzeugs 7 erfasst. In weiteren Ausführungsbeispielen erfassen die Umfeldsensoren der Erfassungseinheit 4 ferner einen Abstand sowie eine Relativgeschwindigkeit eines vorausfahrenden Fahrzeugs. Ferner kann erfasst werden, wenn die erste Fahrspur 12.1, auf der sich das erste Fahrzeug 7 befindet, endet, insbesondere am Ende eines Beschleunigungsstreifens.

Durch die Recheneinheit 5 wird ein Wert für eine Spurwechselintention bestimmt. Durch diesen Wert wird eine Wahrscheinlichkeit quantifiziert, mit welcher der Fahrer des Fahrzeugs 7 zu einem bestimmten Zeitpunkt, insbesondere innerhalb einer kurzen Zeitspanne nach dem aktuellen Zeitpunkt, einen Spurwechsel durchführen will. Dabei kann insbesondere berücksichtigt werden, ob der Fahrer einen Blinker aktiviert hat, ob die erste Fahrspur 12.1 innerhalb dieser Zeitspanne endet oder ob das erste Fahrzeug 7 hinter einem deutlich langsameren weiteren Fahrzeug fährt. Überschreitet der bestimmte Wert der Spurwechselintention einen zuvor definierten Schwellenwert, so geht das Fahrerassistenzsystem 6 davon aus, dass der Fahrer des ersten Fahrzeugs 7 demnächst einen Spurwechsel vornehmen will.

Die von der Erfassungseinheit 4 erfassten Daten sowie die von der Recheneinheit 5 bestimmte Spurwechselintention werden in der Recheneinheit 5 ausgewertet. Dabei wird ein Fahranweisungssignal erzeugt. Dieses umfasst eine oder mehrere Fahranweisungen betreffend eine Bewertung der Sicherheit eines Spurwechsels sowie gegebenenfalls eine Fahranweisung zur Längssteuerung des ersten Fahrzeugs 7, das heißt zu einem Beschleunigen oder Verzögern. Das Fahranweisungssignal wird an die Steuereinheit 3 übertragen, durch die in Abhängigkeit von dem Fahranweisungssignal ein Steuersignal für eine Lichtverteilung 11 erzeugt wird und die Projektionseinheit 1 angesteuert wird.

Das Fahranweisungssignal wird insbesondere so erzeugt, dass ein sicherer Spurwechsel des Fahrzeugs 7 von der ersten 12.1 zur zweiten Fahrspur 12.2 durchgeführt werden kann. Wenn bestimmt wird, dass zum aktuellen Zeitpunkt ein sicherer Spurwechsel durchgeführt werden kann, wird durch die Projektionseinheit 1 eine Lichtverteilung 11 auf die Fahrbahn 12 projiziert, wobei sich die Darstellung der Lichtsymbole 11 teilweise über die erste Fahrspur 12.1 und zum anderen Teil über die zweite Fahrspur 12.2 erstreckt.

Wie in Figur 1B dargestellt, umfasst die Lichtverteilung 11 in dem Ausführungsbeispiel vier einzelne Lichtsymbole 11.1 bis 11.4, in diesem Fall Gräten 11.1 bis 11.4, wobei die Gräten 11.1 bis 11.4 in der Art von Pfeilköpfen dargestellt werden, die in eine Richtung R zeigen. Alternativ oder zusätzlich können andere Formen und Symbole dargestellt werden, beispielsweise Pfeile oder Pfeilköpfe.

Insbesondere erfolgt die Darstellung der Lichtverteilung 11 so, dass durch sie eine Richtung von der ersten 12.1 zur zweiten Fahrspur 12.2 dargestellt wird. Dies erfolgt im dargestellten Beispiel durch eine entsprechende Ausrichtung der Gräten 11.1 bis 11.4. Ferner erfolgt die Darstellung der Lichtverteilung 11 in dem Ausführungsbeispiel zeitlich veränderlich, wobei insbesondere ein Lauflicht dargestellt wird, bei dem die in dem Beispiel dargestellten vier Gräten 11.1 bis 11.4 nacheinander erscheinen und wieder verschwinden. Auf diese Weise wird der Eindruck eines Lichtimpulses erzeugt, der sich in eine Richtung durch die Darstellung der Lichtverteilung 11 fortpflanzt.

In weiteren Ausführungsbeispielen werden andere Lichtsymbole 11.1 bis 11.4 dargestellt, etwa Pfeile oder Pfeilköpfe. Ferner können die Lichtsymbole 11.1 bis 11.4 in einer anderen Weise zeitlich veränderlich dargestellt werden, insbesondere können sie sich auf der Fahrbahn und relativ zum Fahrzeug 7 bewegen, insbesondere in die von ihnen ausgezeichnete Richtung, oder es kann ein Durchlaufen der einzelnen Lichtsymbole 11.1 bis 11.4 nach Art eines Fließbands dargestellt werden.

In einem weiteren Ausführungsbeispiel erfolgt die Darstellung der Lichtverteilung 11 statisch. Dabei kann die Darstellung insbesondere an einer relativ zum ersten Fahrzeug 7 festen Position erfolgen. Die statische Eigenschaft der Darstellung kann jedoch auch darin bestehen, dass die Anordnung und Darstellung der Lichtverteilung 11 mit den Lichtsymbolen 11.1 bis 11.4 nicht zeitlich veränderlich ist, unabhängig davon, ob der Ort der Darstellung der Gesamtheit der Lichtverteilung 11 mit den Lichtsymbolen 11.1 bis 11.4 möglicherweise zeitlich veränderlich ist.

Führt der Fahrer des Fahrzeugs 7 nun einen Spurwechsel durch, so verschwindet die Darstellung der Lichtverteilung 11, wenn das Fahrzeug 7 auf die zweite Fahrspur 12.2 auffährt, wobei insbesondere Daten eines Spurhalteassistenten erfasst und ausgewertet werden.

In einem weiteren Ausführungsbeispiel wird die Lichtverteilung 11 zu einem Zeitpunkt dargestellt, der um die Reaktionszeit des menschlichen Fahrers des Fahrzeugs 7 vor dem Zeitpunkt liegt, zu dem ein sicherer Spurwechsel durchgeführt werden kann. Dies berücksichtigt, dass zwischen dem Darstellen der Lichtverteilung 11 und der Reaktion des Fahrers des Fahrzeugs 7 eine bestimmte Reaktionszeit verstreicht.

Ist ein sicherer Spurwechsel nicht oder nicht mehr möglich, beispielsweise weil das zweite Fahrzeug 8 von hinten näherkommt und keine ausreichend große Lücke zum Einfahren auf die zweite Fahrspur 12.2 mehr zur Verfügung steht, wird die Lichtverteilung 11 nicht oder nicht mehr angezeigt, insbesondere kann ein Spurwechselassistent zum Warnen vor einem gefährlichen Spurwechsel aktiviert werden.

In einem weiteren Ausführungsbeispiel wird ferner die Lichtverteilung 11 so erzeugt, dass dem Fahrer des Fahrzeugs 7 von einem Spurwechsel abgeraten wird, beispielsweise durch eine Darstellung von Lichtsymbolen 11.1 bis 11.4, die in die entgegengesetzte Richtung von der zweiten Fahrspur 12.2 zur ersten Fahrspur 12.1 zeigen und/oder durch eine entsprechende dynamische Darstellung.

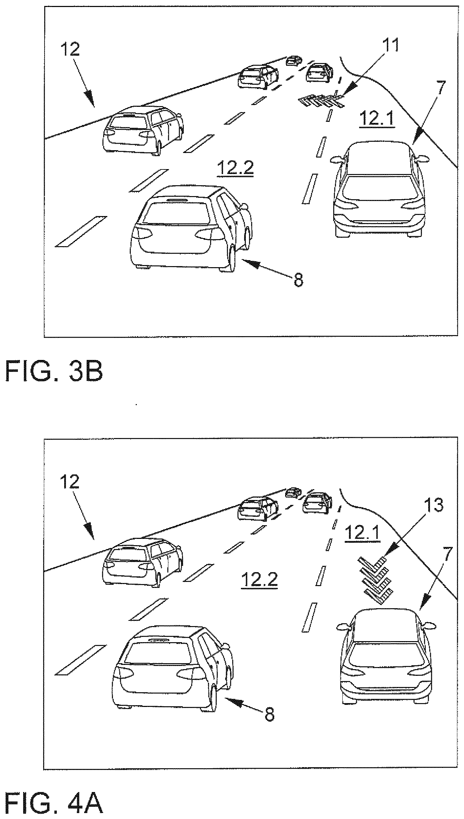

Mit Bezug zu den Figuren 3A und 3B werden Lichtverteilungen 11 für eine Aufforderung zum Beschleunigen des Fahrzeugs 7 und zum Durchführen eines Spurwechsels erläutert. Dabei wird von dem oben mit Bezug zu den Figuren 1A und 1B dargestellten Ausführungsbeispiel des erfindungsgemäßen Fahrerassistenzsystems 6 ausgegangen.

Bei dem in Figur 3A dargestellten Fall wird erfasst, dass das zweite Fahrzeug 8 in einem Bereich seitlich von dem ersten Fahrzeug 7 positioniert ist. Es wird eine Fahranweisung so erzeugt, dass der Fahrer des ersten Fahrzeugs 7 zunächst eine Beschleunigung durchführen soll, um den Abstand zum zweiten Fahrzeug 8 zu vergrößern, sodass anschließend ein sicherer Spurwechsel möglich ist. Es wird daher zunächst die Fahranweisung ausgegeben, dass der Fahrer des ersten Fahrzeugs 7 beschleunigen soll. Dazu wird eine vorbereitende Lichtverteilung 13 erzeugt, die in ihrer Gestalt und Form den oben beschriebenen Lichtverteilung 11 ähnelt, wobei allerdings die vorbereitende Lichtverteilung 13 direkt vor dem ersten Fahrzeug 7 auf der ersten Fahrspur 12.1 dargestellt werden und dabei eine Richtung parallel zur Fahrtrichtung des Fahrzeugs 7 anzeigen. Die Richtung kann auch hier anhand einer Ausrichtung von einzelnen Lichtsymbolen, etwa Pfeilen, Pfeilköpfen oder Gräten, dargestellt werden, und/oder durch eine zeitlich veränderliche Darstellung, etwa mittels eines Lauflichts. In dem in Figur 3A dargestellten Beispiel werden vier Gräten als Lichtsymbole in einer vorbereitenden Lichtverteilung 13 vor das Fahrzeug 7 projiziert, um den Fahrer durch ihre angezeigte Richtung in Fahrtrichtung des ersten Fahrzeugs 7 zum Beschleunigen in Fahrtrichtung aufzufordern. Auf diese Weise wird ein Hinweis auf eine empfohlene Geschwindigkeitsänderung ausgegeben.

Bei dem in Figur 3B dargestellten Fall hat sich das erste Fahrzeug 7 zu einem größeren Abstand zum zweiten Fahrzeug 8 bewegt, sodass nun ein sicherer Spurwechsel möglich ist. Es wird nun die Fahranweisung ausgegeben, dass der Fahrer des ersten Fahrzeugs 7 einen Spurwechsel durchführen soll. Dazu wird eine Darstellung von Lichtsymbolen 11 vordem Fahrzeug 7 auf die Fahrbahn 12 projiziert, ähnlich wie oben mit Bezug zu Figur 2 beschrieben. Die Lichtverteilung 11 erstreckt sich nun teilweise über die erste Fahrspur 12.1 und die zweite Fahrspur 12.2.

Dabei wird der Übergang von der vorbereitenden Lichtverteilung 13 zur Darstellung der Lichtverteilung 11 für den Spurwechsel durch eine Übergangsdarstellung dargestellt. Es wird ein Umklappen der dargestellten vorbereitenden Lichtverteilung 13 zur Lichtverteilung 11 dargestellt, wobei insbesondere ausgenutzt wird, dass die Gestalt der einzelnen Lichtsymbole 11.1 bis 11.4 sowohl bei den Lichtverteilung 11 als auch bei der vorbereitenden Lichtverteilung 13 gleichartig sein kann. Dem Fahrer des Fahrzeugs 7 wird etwa durch eine Rotation oder ein Schwenken der vorbereitenden Lichtverteilung 13 hin zur Lichtverteilung 11 für den Spurwechsel signalisiert, dass eine Fahranweisung zur Geschwindigkeitsänderung in eine Fahranweisung zur Richtungsänderung übergeht.

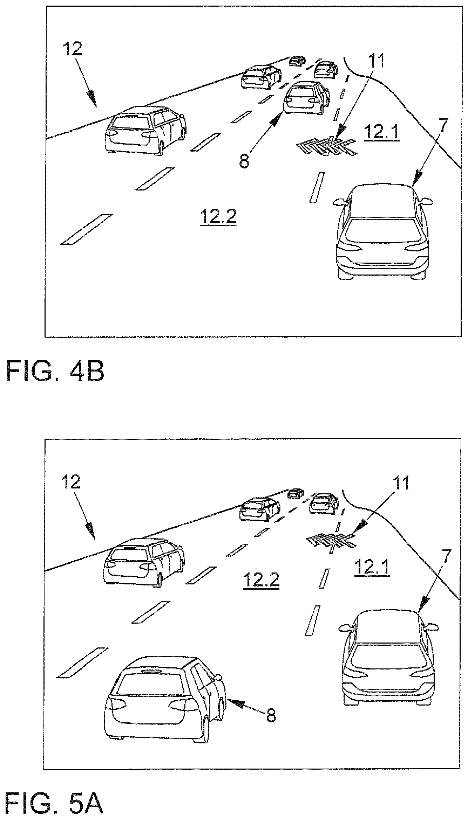

Mit Bezug zu den Figuren 4A und 4B werden Lichtverteilungen 11 für eine Aufforderung zum Verzögern des Fahrzeugs 7 und zum Durchführen eines Spurwechsels erläutert. Dabei wird von dem oben mit Bezug zu den Figuren 1A und 1B dargestellten Ausführungsbeispiel des erfindungsgemäßen Fahrerassistenzsystems 6 ausgegangen.

Analog zu dem oben mit Bezug zu den Figuren 3A und 3B erläuterten Ausführungsbeispiel umfassen die Fahranweisungen in dem hier dargestellten Fall die Aufforderung, das erste Fahrzeug 7 zu verzögern, wobei das zweite Fahrzeug 8 auf der zweiten Fahrspur 12.2 nach vorne vorbeifahren kann. Um den Fahrer des ersten Fahrzeugs 7 zum Verzögern aufzufordern, wird die vorbereitende Lichtverteilung 13 vor dem ersten Fahrzeug 7 so dargestellt, dass sie eine Richtung entgegen der Fahrtrichtung auszeichnen, mithin gespiegelt im Verhältnis zu dem in Figur 3A dargestellten Fall. Nach dem Verzögern des ersten Fahrzeugs 7 und dem Vorbeifahren des zweiten Fahrzeugs 8 wird erfasst, dass ein Spurwechsel nun sicher durchgeführt werden kann. Figur 4B zeigt daher den Fall, bei dem durch Umklappen der vorbereitenden Lichtverteilung 13 die Lichtverteilung 11 für den Spurwechsel dargestellt wird, sodass dem Fahrer des ersten Fahrzeugs 7 signalisiert wird, dass er jetzt den Spurwechsel vornehmen soll.

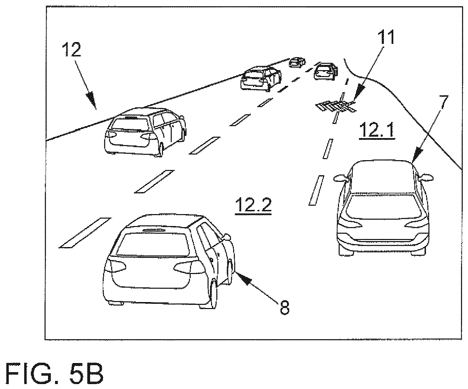

Mit Bezug zu den Figuren 5A und 5B wird ein Ausführungsbeispiel für eine ortsfest dargestellte Lichtverteilung erläutert. Dabei wird von dem oben mit Bezug zu den Figuren 1A und 1B dargestellten Ausführungsbeispiel des erfindungsgemäßen Fahrerassistenzsystems 6 ausgegangen.

Dabei stellen die Figuren 5A und 5B zwei kurz nacheinander auftretende Situationen dar: Das erste Fahrzeug 7 erzeugt eine Projektion der Lichtverteilung 11 auf der Fahrbahn 12 an einer Position, wo der Spurwechsel sicher durchgeführt werden kann. Beim Übergang zu Figur 5B bewegen sich die Fahrzeuge, insbesondere das erste Fahrzeug 7, weiter in Bewegungsrichtung nach vorne, wobei sich das erste Fahrzeug 7 der Position der Lichtverteilung 11 auf der Fahrbahn 12 annähert. Dabei erfolgt die Erzeugung der Lichtverteilung 11 so, dass nunmehr der Abstand zwischen dem Fahrzeug 7 und der dargestellten Lichtverteilung 11 auf der Fahrbahn 12 geringer geworden ist. Wird erfasst, dass ein Spurwechsel bei der durch die Lichtverteilung 11 gekennzeichneten Position nicht mehr sicher vorgenommen werden kann, so wird die Lichtverteilung 11 an dieser Position nicht mehr dargestellt. Alternativ kann die Lichtverteilung 11 nun bei einer anderen Position, bei der die Möglichkeit zum Durchführen eines sicheren Spurwechsels erfasst wurde, dargestellt werden. Die Position, bei der die Lichtverteilung 11 dargestellt wird, kann also "springen".

Bei einem weiteren Ausführungsbeispiel wird erfasst, dass sich das Fahrzeug 7 auf das Ende des Beschleunigungsstreifens 12.1 zubewegt, dass also nur mehr begrenzte Zeit für den Spurwechsel auf die zweite Fahrspur 12.2 zur Verfügung steht. Dem Fahrer wird signalisiert, dass der Spurwechsel dringend durchgeführt werden sollte, indem, wenn ein sicherer Spurwechsel vorgenommen werden kann, die Lichtverteilung 11 in besonderer hervorgehobener Weise dargestellt wird, insbesondere durch Blinken und/oder eine schnellere und/oder deutlichere zeitliche Veränderung, beispielsweise durch ein schnelleres Lauflicht.

### Bezugszeichenliste

- 1: Ausgabeeinheit; Projektionseinheit
- 2: Scheinwerfersystem
- 3: Steuereinheit
- 4: Erfassungseinheit
- 5: Recheneinheit
- 6: Fahrerassistenzsystem
- 7: erstes Fahrzeug
- 8: zweites Fahrzeug
- 11: Lichtverteilung
- 11.1, 11.2, 11.3, 11.4: Einzelne Lichtsymbole; Gräten
- 12: Fahrbahn
- 12.1; 12.2: erste und zweite Fahrspur
- 13: Vorbereitende Lichtverteilung
- R: Richtung

## Patentansprüche

1. Verfahren zum Betreiben eines Fahrerassistenzsystems (6) für ein erstes Fahrzeug (7), das sich auf einer ersten Fahrspur (12.1) einer Fahrbahn (12) befindet, welche ferner zumindest eine zweite Fahrspur (12.2) umfasst, die benachbart zur ersten Fahrspur (12.1) liegt, bei dem
Betriebsdaten und Umgebungsdaten des ersten Fahrzeugs (7) erfasst werden, eine Spurwechselintention für das erste Fahrzeug (7) bestimmt wird,
in Abhängigkeit von den erfassten Betriebsdaten und Umgebungsdaten des ersten Fahrzeugs (7) ein Fahranweisungssignal für die Durchführung eines Spurwechsels des ersten Fahrzeugs (7) von der ersten (12.1) auf die zweite Fahrspur (12.2) bestimmt wird,
von dem ersten Fahrzeug (7) in Abhängigkeit von dem Fahranweisungssignal ein Steuersignal für eine Lichtverteilung (11) mit zumindest einem Lichtsymbol (11.1, 11.2, 11.3, 11.4) erzeugt wird, durch die einem Fahrer des ersten Fahrzeugs (7) signalisiert wird, dass der Spurwechsel sicher erfolgen kann, wobei
anhand des Steuersignals die Lichtverteilung (11) für den Fahrer des ersten Fahrzeugs (7) auf der Fahrbahn (12) dargestellt wird,
wobei die Lichtverteilung (11) in zwei Bereichen dargestellt wird, wobei sich ein erster Bereich auf der ersten Fahrspur (12.1) und ein zweiter Bereich auf der zweiten Fahrspur (12.2) befindet,
**dadurch gekennzeichnet, dass**
das Fahranweisungssignal eine vorbereitende Lichtverteilung (13) als Hinweis auf eine empfohlene Geschwindigkeitsänderung des ersten Fahrzeugs (7) umfasst, die auf der ersten Fahrspur (12.1) dargestellt werden, wobei
die Lichtverteilung (11) für den Spurwechsel anschließend an die Darstellung der vorbereitenden Lichtverteilung (13) dargestellt wird, wobei eine Übergangsdarstellung erzeugt wird, die nach der vorbereitenden Lichtverteilung (13) und vorder Lichtverteilung (11) für den Spurwechsel dargestellt wird.

2. Verfahren gemäß Anspruch 1,
**dadurch gekennzeichnet, dass**
die Lichtverteilung (11) zeitlich veränderlich dargestellt wird, wobei durch die zeitliche veränderte Darstellung eine Bewegung in Richtung von der ersten Fahrspur (12.1) zur zweiten Fahrspur (12.2) dargestellt wird.

3. Verfahren gemäß einem der vorhergehenden Ansprüche,
**dadurch gekennzeichnet, dass**
die Lichtverteilung (11) mittels einer Projektionseinheit (1) auf die Fahrbahn (12) projiziert und/oder mittels einer Sichtfeldanzeige dargestellt wird.

4. Verfahren gemäß einem der vorhergehenden Ansprüche,
**dadurch gekennzeichnet, dass**
die erfassten Betriebsdaten des ersten Fahrzeugs (7) eine Geschwindigkeit, einen Lenkeinschlag und/oder den Aktivierungszustand eines Blinkers des ersten Fahrzeugs (7) umfassen.

5. Verfahren gemäß einem der vorhergehenden Ansprüche,
**dadurch gekennzeichnet, dass**
die erfassten Umgebungsdaten des ersten Fahrzeugs (7) Informationen über ein Ende der ersten Fahrspur (12.1) und/oder über zumindest ein weiteres Fahrzeug (8) in der Umgebung des ersten Fahrzeugs (7) umfassen.

6. Verfahren gemäß einem der vorhergehenden Ansprüche,
**dadurch gekennzeichnet, dass**
die Spurwechselintention automatisch erzeugt oder durch eine Nutzereingabe erfasst wird.

7. Verfahren gemäß einem der vorhergehenden Ansprüche,
**dadurch gekennzeichnet, dass**
die Lichtverteilung (11)
- in relativ zu dem ersten Fahrzeug (7) konstantem Abstand oder
- bei einer relativ zur Fahrbahn (12) konstanten Position oder
- bei einer relativ zu einer potentiellen Einscherposition konstanten Position auf der Fahrbahn (12) dargestellt wird.

8. Verfahren gemäß einem der vorhergehenden Ansprüche,
**dadurch gekennzeichnet, dass**
das Fahranweisungssignal einen Dringlichkeitswert umfasst und
die Lichtverteilung (11) so erzeugt wird, dass dem Fahrer die Dringlichkeit in Abhängigkeit von dem Dringlichkeitswert signalisiert wird.

9. Fahrerassistenzsystem (6) für ein erstes Fahrzeug (7), das sich auf einer ersten Fahrspur (12.1) einer Fahrbahn (12) befindet, welche ferner zumindest eine zweite Fahrspur (12.2) umfasst, die benachbart zur ersten Fahrspur (12.1) liegt, mit
einer Erfassungseinheit (4), durch die Betriebsdaten und Umgebungsdaten des ersten Fahrzeugs (7) erfassbar sind,
eine Recheneinheit (5), durch die eine Spurwechselintention für das erste Fahrzeug (7) bestimmbar ist und
durch die in Abhängigkeit von den erfassten Betriebsdaten und Umgebungsdaten des ersten Fahrzeugs (7) ein Fahranweisungssignal für die Durchführung eines Spurwechsels des ersten Fahrzeugs (7) von der ersten (12.1) auf die zweite Fahrspur (12.2) bestimmbar ist,
einer Steuereinheit (3), durch die in Abhängigkeit von dem Fahranweisungssignal ein Steuersignal für eine Lichtverteilung (11) mit zumindest einem Lichtsymbol (11.1, 11.2, 11.3, 11.4) erzeugbar ist, durch die dem Fahrer des ersten Fahrzeugs (7) signalisiert wird, dass der Spurwechsel sicher erfolgen kann, und
einer Ausgabeeinheit (1), durch die anhand des Steuersignals die Lichtverteilung (11) für den Fahrer des ersten Fahrzeugs (7) auf der Fahrbahn (12) darstellbar ist,
wobei die Lichtverteilung (11) in zwei Bereichen dargestellt wird, wobei sich ein erster Bereich auf der ersten Fahrspur (12.1) und ein zweiter Bereich auf der zweiten Fahrspur (12.2) befindet,
**dadurch gekennzeichnet, dass**
das Fahranweisungssignal eine vorbereitende Lichtverteilung (13) als Hinweis auf eine empfohlene Geschwindigkeitsänderung des ersten Fahrzeugs (7) umfasst, die auf der ersten Fahrspur (12.1) darstellbar ist, wobei
die Lichtverteilung (11) für den Spurwechsel anschließend an die Darstellung der vorbereitenden Lichtverteilung (13) darstellbar ist, wobei eine Übergangsdarstellung erzeugt wird, die nach der vorbereitenden Lichtverteilung (13) und vor der Lichtverteilung (11) für den Spurwechsel darstellbar ist.

## Claims

1. Method for operating a driver assistance system (6) for a first vehicle (7) located on a first driving lane (12.1) of a road (12) that furthermore comprises at least one second driving lane (12.2) adjacent to the first driving lane (12.1), in which
operating data and environmental data of the first vehicle (7) are captured,
a lane-changing intention for the first vehicle (7) is determined,
a driving instruction signal for performing a lane change of the first vehicle (7) from the first driving lane (12.1) to the second driving lane (12.2) is determined in dependence on the captured operating data and environmental data of the first vehicle (7),
a control signal for a light distribution (11) with at least one light symbol (11.1, 11.2, 11.3, 11.4) is generated by the first vehicle (7) in dependence on the driving instruction signal, through which control signal it is signalled to a driver of the first vehicle (7) that the lane change can be performed safely, wherein
the light distribution (11) is presented for the driver of the first vehicle (7) on the road (12) on the basis of the control signal,
wherein the light distribution (11) is presented in two regions, wherein a first region is located on the first driving lane (12.1) and a second region is located on the second driving lane (12.2),
**characterized in that**
the driving instruction signal comprises a prepared light distribution (13) as indication of a recommended speed change of the first vehicle (7), which is presented on the first driving lane (12.1), wherein
the light distribution (11) for the lane change is presented subsequently to the presentation of the prepared light distribution (13), wherein a transitional presentation is produced that is presented after the prepared light distribution (13) and before the light distribution (11) for the lane change.

2. Method according to Claim 1,
**characterized in that**
the light distribution (11) is presented in a temporally variable manner, wherein a movement in the direction from the first driving lane (12.1) to the second driving lane (12.2) is presented by way of the temporally varied presentation.

3. Method according to either of the preceding claims, **characterized in that**
the light distribution (11) is projected onto the road (12) by means of a projection unit (1) and/or is presented by means of a field-of-view display.

4. Method according to one of the preceding claims, **characterized in that**
the captured operating data of the first vehicle (7) comprises a speed, a steering angle and/or the activation state of a turn indicator light of the first vehicle (7).

5. Method according to one of the preceding claims, **characterized in that**
the captured environmental data of the first vehicle (7) comprises information relating to an end of the first driving lane (12.1) and/or relating to at least one further vehicle (8) in the environment of the first vehicle (7).

6. Method according to one of the preceding claims, **characterized in that**
the lane-changing intention is automatically produced or captured by way of a user input.

7. Method according to one of the preceding claims, **characterized in that** the light distribution (11) is presented on the road (12)
- at a constant distance relative to the first vehicle (7) or
- at a constant position relative to the road (12) or
- at a constant position relative to a potential cutting-in position.

8. Method according to one of the preceding claims, **characterized in that**
the driving instruction signal comprises an urgency value and
the light distribution (11) is produced such that the urgency is signalled to the driver in dependence on the urgency value.

9. Driver assistance system (6) for a first vehicle (7) located on a first driving lane (12.1) of a road (12) that furthermore comprises at least one second driving lane (12.2) adjacent to the first driving lane (12.1), comprising
a capturing unit (4), through which operating data and environmental data of the first vehicle (7) are capturable,
a computing unit (5), through which a lane-changing intention for the first vehicle (7) is determinable and through which a driving instruction signal for performing a lane change of the first vehicle (7) from the first driving lane (12.1) to the second driving lane (12.2) is determinable in dependence on the captured operating data and environmental data of the first vehicle (7),
a control unit (3), through which a control signal for a light distribution (11) with at least one light symbol (11.1, 11.2, 11.3, 11.4) is producible in dependence on the driving instruction signal, through which control signal it is signalled to the driver of the first vehicle (7) that the lane change can be performed safely, and an output unit (1), through which the light distribution (11) is presentable for the driver of the first vehicle (7) on the road (12) on the basis of the control signal, wherein the light distribution (11) is presented in two regions, wherein a first region is located on the first driving lane (12.1) and a second region is located on the second driving lane (12.2),
**characterized in that**
the driving instruction signal comprises a prepared light distribution (13) as indication of a recommended speed change of the first vehicle (7), which is presentable on the first driving lane (12.1), wherein
the light distribution (11) for the lane change is presentable subsequently to the presentation of the prepared light distribution (13), wherein a transitional presentation is produced that is presentable after the prepared light distribution (13) and before the light distribution (11) for the lane change.

## Revendications

1. Procédé de fonctionnement d'un système d'assistance à la conduite (6) destiné à un premier véhicule (7) qui est situé sur une première voie de roulement (12.1) d'une chaussée (12) qui comprend en outre au moins une deuxième voie de roulement (12.2) adjacente à la première voie de roulement (12.1), procédé dans lequel
des données de fonctionnement et des données d'environnement du premier véhicule (7) sont acquises,
une intention de changement de voie du premier véhicule (7) est déterminée,
un signal d'instruction de conduite pour effectuer un changement de voie du premier véhicule (7) de la première voie de roulement (12.1) à la deuxième voie de roulement (12.2) est déterminé en fonction des données de fonctionnement et des données d'environnement acquises du premier véhicule (7),
un signal de commande destiné à une distribution de lumière (11) est généré avec au moins un symbole lumineux (11.1, 11.2, 11.3, 11.4) par le premier véhicule (7) en fonction du signal d'instruction de conduite, lequel signal de commande signale à un conducteur du premier véhicule (7) que le changement de voie peut être effectué en toute sécurité,
la distribution de lumière (11) destinée au conducteur du premier véhicule (7) étant représentée sur la chaussée (12) sur la base du signal de commande,
la distribution de lumière (11) étant représentée en deux zones, une première zone étant sur la première voie de roulement (12.1) et une deuxième zone étant sur la deuxième voie de roulement (12.2), **caractérisé en ce que**
le signal d'instruction de conduite comprend une distribution de lumière préparatoire (13) comme indication d'un changement de vitesse recommandé du premier véhicule (7) qui est représenté sur la première voie de roulement (12.1),
la distribution de lumière (11) destinée au changement de voie étant représentée à la suite de la représentation de la distribution de lumière préparatoire (13), une représentation de transition étant générée qui est représentée après la distribution de lumière préparatoire (13) et avant la distribution de lumière (11) destinée au changement de voie.

2. Procédé selon la revendication 1,
**caractérisé en ce que**
la distribution de lumière (11) est représentée de manière variable dans le temps, la représentation modifiée dans le temps représentant un mouvement dans le sens de la première voie de roulement (12.1) à la deuxième voie (12.2).

3. Procédé selon l'une des revendications précédentes,
**caractérisé en ce que**
la distribution de lumière (11) est projetée sur la chaussée (12) au moyen d'une unité de projection (1) et/ou est représentée au moyen d'un affichage de champ de vision.

4. Procédé selon l'une des revendications précédentes,
**caractérisé en ce que**
les données de fonctionnement acquises du premier véhicule (7) comprennent une vitesse, un angle de braquage et/ou l'état d'activation d'un clignotant du premier véhicule (7).

5. Procédé selon l'une des revendications précédentes,
**caractérisé en ce que**
les données d'environnement acquises du premier véhicule (7) comprennent des informations sur une extrémité de la première voie de roulement (12.1) et/ou sur au moins un autre véhicule (8) dans l'environnement du premier véhicule (7).

6. Procédé selon l'une des revendications précédentes,
**caractérisé en ce que**
l'intention de changement de voie est générée automatiquement ou acquise par une entrée utilisateur.

7. Procédé selon l'une des revendications précédentes,
**caractérisé en ce que**
la distribution de lumière (11) est représentée
- à distance constante par rapport au premier véhicule (7) ou
- à une position constante par rapport à la chaussée (12) ou
- à une position constante sur la chaussée (12) par rapport à une position de rabattement potentielle.

8. Procédé selon l'une des revendications précédentes,
**caractérisé en ce que**
le signal d'instruction de conduite comprend une valeur d'urgence et
la distribution de lumière (11) est générée de manière que l'urgence soit signalée au conducteur en fonction de la valeur d'urgence.

9. Système d'assistance à la conduite (6) destiné à un premier véhicule (7) qui est situé sur une première voie de roulement (12.1) d'une chaussée (12) qui comprend en outre au moins une deuxième voie de roulement (12.2) adjacente à la première voie de roulement (12.1), ledit système comprenant
une unité d'acquisition (4) permettant d'acquérir des données de fonctionnement et des données d'environnement du premier véhicule (7),
une unité de calcul (5) permettant de déterminer une intention de changement de voie du premier véhicule (7) et
de déterminer un signal d'instruction de conduite destiné à effectuer un changement de voie du premier véhicule (7) de la première voie de roulement (12.1) à la deuxième voie de roulement (12.2) en fonction des données de fonctionnement et des données d'environnement acquises du premier véhicule (7),
une unité de commande (3) permettant de générer, en fonction du signal d'instruction de conduite, un signal de commande d'une distribution de lumière (11) avec au moins un symbole lumineux (11.1, 11.2, 11.3, 11.4), lequel signal signale au conducteur du premier véhicule (7) que le changement de voie peut être effectué en toute sécurité, et
une unité de sortie (1) permettant de représenter la distribution de lumière (11) destinée au conducteur du premier véhicule (7) sur la chaussée (12) sur la base du signal de commande,
la distribution de lumière (11) étant représentée en deux zones, une première zone étant située sur la première voie de roulement (12.1) et une deuxième zone étant située sur la deuxième voie de roulement (12.2),
**caractérisé en ce que**
le signal d'instruction de conduite comprend une distribution de lumière préparatoire (13) comme indication d'un changement de vitesse recommandé du premier véhicule (7) qui peut être représentée sur la première voie de roulement (12.1),
la distribution de lumière (11) destinée au changement de voie pouvant être représentée à la suite de la représentation de la distribution de lumière préparatoire (13), une représentation de transition étant générée qui peut être représentée après la distribution de lumière préparatoire (13) et avant la distribution de lumière (11) destinée au changement de voie.
